# EUROPEAN PATENT SPECIFICATION

(11) **EP 2 045 748 B1**
(45) Date of publication and mention of the grant of the patent: **17.08.2016**
(21) Application number: 08155498.2
(22) Date of filing: 30.04.2008
(51) Int. Cl.: G06F 21/54

(54) **Anti-tamper techniques**
Manipulationssichere Techniken
Techniques anti-fraude

(30) Priority: 02.10.2007 GB 0719250; 29.02.2008 GB 0803816
(43) Date of publication of application: 08.04.2009
(73) Proprietor: Metaforic Limited, Glasgow G2 2RQ (GB)
(72) Inventor: Harkness, Graeme c/o Slam Games Ltd., Glasgow G22QZ Scotland (GB)
(74) Representative: de Jong, Jean Jacques

(56) References cited:
- EP-A- 1 681 609
- US-A1- 2003 023 856
- US-A1- 2003 188 231
- US-A1- 2006 026 569
- US-A1- 2006 031 686
- US-A1- 2006 047 955

## Description

The present invention relates generally to the field of software security and to techniques for increasing the resistance of a computer program to unauthorized tampering. In particular, the present invention relates to program protection techniques which seek to provide a degree of protection from unauthorized modification and/or access to program code.

In releasing a software application for execution on end users' hardware, a program developer is effectively providing a user with complete access to the program code of that application. Unfortunately, it is a fact that some end-users will attempt to compromise a software application in order, for example, to obtain illegal copies, gain unlicensed access to certain features, steal IP from the application, inject malicious code or cheat in online games. Indeed, in the context of online gaming, which often seek to support hundreds or thousands of players simultaneously over a network, the occurrence of online cheating can seriously undermine honest players' experience of the game. Free access to executable code by unauthorised users can often result in loss of intellectual property and provides the user with an easy means for probing the application for security vulnerabilities. Also, applications may be reverse engineered and then modified to remove metering or usage control before being recompiled, ultimately resulting in a loss of revenue for the code provider.

Thus, the environment into which publishers release their programs can be considered to be a hostile one. There is therefore a need to protect programs from tampering or misuse, which may involve unauthorised modification and/or copying.

A number of anti-tamper techniques have been previously proposed for deterring would-be hackers or for protecting computer programs from being modified and/or copied. For example, it is known for software programs to utilise copy protection techniques or to have limitations encoded into them which, for example, require password or serial number access, prevent copying or restrict the use of the program in some way.

Techniques for "obfuscating" software code have also been proposed. Obfuscated code, or shrouded code as it is also known, is a type of executable code, which is intentionally made very difficult to read and understand. It is also known to employ a sub-set of obfuscation known as program-folding, e.g. to try to protect firmware in electrical equipment. Program folding involves calling routines from random places in the source-code, essentially causing the program to jump around during execution. Although obfuscated code can deter reverse engineering, there is a still a distinct possibility that the code could be read and understood, and therefore modified. As such, obfuscated code provides only low-level security means, and it is often necessary to use in conjunction with additional security procedures, e.g. encryption. Additionally, the most common software reverse engineering attacks target copy protection schemes. These schemes generally rely heavily on existing operating system procedure calls, making basic code obfuscation easily bypassed using the same tools used with unobfuscated code. Furthermore, obfuscated code being difficult to read and understand is not only a problem for would-be software abusers but also for the software creators themselves, as obfuscated code is inherently very difficult to debug. As a result, it is often necessary to maintain two versions of the code; the unobfuscated code for debugging, and the obfuscated code for distribution. Due to the low level of security provided, this additional effort is often considered to outweigh the benefits of obfuscated code and therefore alternative methods are required.

Preferred embodiments of the present invention seek to provide a program, or a portion thereof, with some protection for attributes specified by the program developer, in order to try to ensure those attributes are enforced for as long as possible. Preferred embodiments also seek to protect against the unauthorised tampering of a computer program, e.g. modification of the program, that is against the wishes of the original author or program developer. More specifically, preferred embodiments of the present invention seek to provide a degree of protection against unauthorised modification of the application and/or data in order to prevent an end-user from disabling attributes of the program, for example, features which serve to enforce usage/access/dissemination policies.

According to a first aspect of the present invention there is provided an anti-tamper method for protecting a program code portion against tampering, the anti-tamper method comprising parsing the program code portion to generate a representation thereof as an Abstract Syntax Tree; based on said representation, identifying a plurality of target functions; dividing said program code portion into a plurality of code segments, such that each code segment is based on a respective target function; defining a sequence of code segments from the code segments, wherein said sequence of code segments comprises a root-code segment and a plurality of sub-code segments; providing each sub-code segment with an integrity checking portion for checking the integrity of a target code segment, said target code segment of a given sub-code segment being the code segment that is sequentially adjacent in a checking direction towards said root-code segment; wherein the integrity checking portion of a given sub-code segment is operable to carry out a checking procedure on the respective target code segment to obtain a runtime result, and to compare said runtime result with a reference result comprised in said given sub-code segment.

US2006/0031686 discloses a method of protecting host application code. The method includes steps of preprocessing the host application code; obfuscating the host application code; installing guards in the host application code to protect client blocks; randomly rearranging the code blocks of the host application code; linking the rearranged host application code with other resources to produce a binary executable image; and patching the binary executable image with data values to be used by the guard. The method can be used to install a plurality of guards to form a distributed network of guards that cooperatively protect the host application code and the other guards in the network.

US2003/0023856 discloses a self-checking mechanism, with testers and connectors embedded into an executable using the following process:
Step 1: Source-code processing. Insert a set of testers, coded in assembly language, into the source code of the executable.
Step 2: Object-code processing.
Step 2A: Shuffle/rearrange groups of basic blocks of the object code, thereby randomizing the tester distribution.
Step 2B: Insert correctors, at least one per tester, into the object code.
Step 2C: Associate a corrector and a tester interval with each tester, in such a way as to provide redundant coverage of the executable and so that the correctors can later be set in an appropriate order to made the testers test correctly.
Step 3: Installation-time processing.
Step 3A: Compute watermark values.
Step 3B: Compute corrector values given the watermark values.
Step 3C Form patches containing the watermark and corrector values.
Step 3D Install the program by combining the patches with a pre-existing, non-functional executable to prepare a watermarked, self-checking, fully functional executable.

The reader will appreciate that a "sequence" of code segments implies that code segments follow one after the other, i.e. a succession of code segments or a series of code segments forming chain. The integrity checking functions built into each of the sub code segments therefore effectively binds the segments together to form a linked chain of checks.

It should be appreciated that, within the context of the present invention, a sequentially adjacent code segment refers to the adjacent code segment within the defined sequence of code sequence and not, necessarily, the physically adjacent code segment.

The, or each, sequence preferably comprises at least one segment having an attribute defining program portion which specifies an attribute set by the developer. For example, the attribute may define a rule, a requirement of use or a limitation to restrict or control the use of the program. Thus, it is advantageously possible for preferred embodiments of the present invention to allow a variety of appealing protections to be applied to candidate programs, including the ability to support business models such as up selling to pirate users of a protected application. Furthermore, by appropriately selecting the content of the attribute defining program portion, which will typically define a proper use policy of the application, embodiments of the present invention can be applied to a wide range of protection needs, such as: client protection; DRM protection; licence management; IP protection; pirate distribution tracing and the like.

In the context of a computer game the program may, for example, specify a trial period of 30 days or may limit use of the computer game up to level five. Thus, in these circumstances and according to an embodiment of the present invention, a code sequence may be defined in which the length of the trial period forms one attribute to be protected by the sequence. Thus, a hacker may wish to try to change the program code to lengthen the trial period or raise the allowed upper level of play. However, in the case of a program portion which has been protected by an anti-tamper method embodying the present invention, in order to achieve this without the inherent integrity checking system failing, the hacker would have to modify not only the code of the attribute defining program portion, but also the code for every code segment in the code sequence to ensure that the runtime result obtained for a given target code segment could be verified with reference to the stored reference result. Whilst the modification of each code segment in this manner may not be particularly difficult, the process of making consequential changes to all the sub-code segments in the sequence in order to defeat the protection would be extremely laborious and time-consuming, and could take hundreds or even thousands of hours depending on the number of sequences of checks embedded within a given application and the number of code segments comprised in each sequence.

Preferably, the root code segment will comprise the program portion defining an attribute of the program. Although it convenient for a sequence of code segments to be defined such that the root code segment comprises, or is associated with, code or memory which specifies or defines a given attribute, it should be appreciated that the attribute-defining segment of a sequence may be any code segment, including a sub-code segment.

According to a preferred embodiment, the anti-tamper method will involve establishing the distribution or "topology" of the checks embedded in the program code portion. The defined topology represents the way in which code segments are effectively "linked" to each other within the divided source code or within the compiled code, in the sense that each integrity checking portion will carry out a checking procedure on a specified target code segment at runtime. Preferably, a topology is established for a candidate program portion in which the code segments of that program portion define a plurality of sequences of code segments, wherein one or more code segments forms a part of more than one code sequence. A topology may be established in which one or more of the sub-code segments comprises an integrity checking portion having a plurality of target code segments defined therefore such that, at runtime, that sub-code segment will be operable to carry out a checking procedure on more than one target code segment. According to a particularly preferred embodiment, a topology may be established for a given program portion which comprises a so-called "inverted tree structure". According to such an embodiment, the sub-code segments can be considered as forming different "levels" of the structure, with a root code segment defining the "top" of the tree, wherein every sub-code segment at a given level is operable to perform a checking procedure on each of the sub-code segments comprised in the level "above" (towards the root code segment).

The implementation of an anti-tamper method according to embodiments of the present invention will typically involve a reference result computation process whereby the, or each, reference result of each sub-code segment is computed. This process will preferably involve carrying out a sequence of computations to obtain reference results for each of the defined sequences of code segments.

A reference result computation process that may be performed for a given code sequence according to an embodiment of the present invention will now be briefly described. The reference result for a first sub-code segment which is sequentially adjacent in a direction opposite to the checking direction to the root-code segment is obtained by performing an implementation checking procedure, defined by the integrity checking portion of the sub-code segment, on its defined target code segment namely the root code segment. This may involve carrying out a cyclic redundancy check on code or memory of the root code segment that specifies an attribute of the program to be protected, to obtain a first value or first "reference result". At runtime, the integrity checking portion will be operable to perform a runtime checking procedure on the predefined area of memory of the root code segment in order to obtain a first "runtime result" and will be further operable to compare this runtime result with the reference result associated therewith. The integrity of the root code segment is verified according to this comparison, which may require the runtime result to be equal to the reference result or related by some predetermined relationship.

Similarly, the reference result for a second sub-code segment which is sequentially adjacent in a direction opposite to the checking direction to the first sub-code segment, is obtained by performing an implementation checking procedure on its defined target code segment, namely the first sub-code segment. The implementation checking procedure is carried out, for example, on memory or code of the first code-segment that specifies the first reference result. Thus, a second reference result (which will be dependent upon the first reference result) is obtained. At runtime, the integrity checking portion of the second sub-code portion is operable to carry out a runtime checking procedure on memory or code that specifies the value of the first runtime result, as opposed to the first reference result, and is then further operate to compare the resultant second runtime result with the second reference result associated with the second sub-code segment.

This reference result computation process continues in this manner until the (or each) reference result for each of the sub-code segments comprised in the sequence has been defined.

According to a second aspect of the present invention, there is provided an anti-tamper system for protecting a program code portion against tampering, the anti-tamper system comprising a computer readable storage medium having a plurality of program code segments of a program code portion stored thereon, said program code segments defining a sequence of code segments, wherein each code segment is based on a respective target function of the program code portion, and wherein said sequence of code segments comprises a root-code segment and a plurality of sub-code segments; wherein each sub-code segment comprises with an integrity checking portion for checking the integrity of a target code segment, said target code segment for a given sub-code segment being the code segment that is sequentially adjacent in a checking direction towards said root-code segment; and wherein the integrity checking portion of a given sub-code segment is operable to carry out a checking procedure on the respective target code segment to obtain a runtime result, and to compare said runtime result with a reference result comprised in said given sub-code segment.

When an application or program portion that has been derived according to an embodiment of the first aspect of the present invention is executed within an execution environment or runtime system of a computer, the program will be operable to conduct, at runtime, an integrity checking method according to an embodiment of the second aspect. It should be appreciated that the runtime checking procedure defiled for a given sub-code segment will be initiated when that sub-code segment is executed as part of the program portion.

Preferred embodiments of the present invention advantageously provide a robust and effective means for protecting a program portion from tampering In order to crack or undermine the protection afforded by embodiments of the present invention in order, for example, to modify an attribute defining a proper use of the program, it would be necessary in the case of a program protected by an anti-tamper method according to a preferred embodiment of the present invention, for an end-user to identify and alter the properties of every single code-segment comprised in the code sequence which is associated with that defined attribute. Thus, only by removing all the checks can the application be modified at will. While this is not an impossible task, it is an extremely laborious and time-consuming one which may take hundreds or even thousands of hours to complete. Embodiments of the present invention are advantageous in that they provide an effective protection mechanism which will deter hackers from making undetected modifications to an application.

In particular, preferred embodiments of the present invention allow one or more attributes of the program specified by the provider to be protected against unauthorised tampering by means of a large number of simple, inter-connected checks which verify the integrity of the program and of themselves. The checks are "inter-connected" in the sense that each one checks another, eventually providing a huge web of checks. This makes for a mutually self-buttressing, distributed integrity checking mechanism.. Any unauthorised modification made by an end-user will be advantageously detected by this system, and attempts to circumvent these checks will preferably be prevented.

There are numerous types of checking algorithms or functions which would be suitable for the checking procedure. Preferably, the integrity checking portion of one said sub-code segment defines a checking procedure which involves performing a checksum procedure on the target code segment. This may be, for example, cyclic redundancy check.

According to a particularly preferred embodiment, a candidate application, or program code portion, is divided into code segments such that each segment comprises a function of the program code portion. This is advantageous in that it ensures that the critical components of the application are subjected to the integrity checking procedures. The segments are preferably defined to include code adjacent to a function in order to ensure that there is not code of the program portion which does not form part of a defined segments.

It is envisaged that preferred embodiments of the present invention will involve the insertion of a very large number of checks in a given program portion or application, for example between a thousand and ten thousand checks in an application which is a few megabytes in size. A program code portion may comprise a plurality of code sequences, such that one or more segments form part of more than one code sequence.

According to a third aspect of the present invention, there is provided an integrity checking method for checking the integrity of a program code portion comprising a plurality of code segments wherein each code segment is based on a respective target function of the program code portion, said program portion having at least one sequence of code segments comprising a root code segment and a plurality of sub-code segments, the integrity checking method comprising, for a given code segment:
i) performing a runtime checking procedure which checks the integrity of a target code segment to obtain a runtime result, said target code segment for said given sub-code segment being the code segment that is sequentially adjacent in a checking direction towards said root-code segment; and
ii) comparing said runtime result with a reference result.

According to embodiments of the first aspect of the present invention it is possible for the required checking code or integrity checking functionality, i.e, an integrity checking portion and a reference portion (which comprises a reference result) for each sub-code segment, to be inserted at source code level, i.e. directly into the source code. Alternatively, is possible for the checking code to be inserted into the application following after it has been compiled. Thus, according to an anti-tamper method of one embodiment of the first aspect, the program portion comprises source code. Alternatively, according to an anti-tamper method of another embodiment of the first aspect of the present invention, the program portion comprises compiled code.

The insertion of the check portions into the underlying application or program portion, either as source code or as object code, may be achieved in a number of ways. For example, it is possible for the checks to be inserted in the code manually, whereby a program developer inserts the checking code into he defined program code segments. This, however, will be very labour intensive. Alternatively, it is possible for the integrity checking portion and the reference result to be inserted into the sub-code segments by means of pre-processing techniques involving the use of one or more macros written for this purpose.

As a further alternative, metaprogramming techniques may be useful to apply the network of checks at source code level. Such techniques may be particularly advantageous since they will allow automation of the injection of the checking portions into the application. In particular, metaprogramming techniques which utilise a data structure, such as an abstract syntax tree (AST), allow analysis of a given program code portion or application in a form that is amenable to making modifications. Thus, integrity checking portions and reference results can be conveniently installed throughout the divided segments of the application. This approach is also advantageous in that inserted checks applied at source code level are naturally hidden, or obfuscated, since they are compiled with the application code. Thus, using a source code level meta-programming approach is beneficial in that it allows injected checks to be disguised by the optimising compiler that runs over the resultant source code which will intersperse integrity checking code with the underlying application code.

In any of the above embodiments or aspects, the various features may be implemented in hardware, or as software modules running on one or more processors. Features of one aspect or embodiment may be applied to any of the other aspects or embodiments.

The invention also provides a computer program or a computer program product for implementing the techniques described herein, and a computer readable storage medium having stored thereon a program for implementing the techniques described herein. A computer program embodying the present invention may be stored on a computer-readable medium, or it could, for example, be in the form of signal such as a downloadable data signal provided from an internet website, or it could be in any other form.

For a better understanding of the present invention, and to show how the same may be carried into effect, reference will now be made by way of example to the accompanying drawings in which:
Figure 1 illustrates an anti-tamper system according to an embodiment of the present invention;
Figure 2 illustrates a code sequence of the anti-tamper system shown in Figure 1; and Figure 3 illustrates a reference result computation process P according to an embodiment of the present invention, and an integrity checking process performed at runtime;
Figure 4 shows a simplified illustration of an anti-tamper system embodying the present invention having an inverted tree structure; and
Figure 5 illustrates the steps involved according to an anti-tamper method embodying the present invention utilising meta-programming.

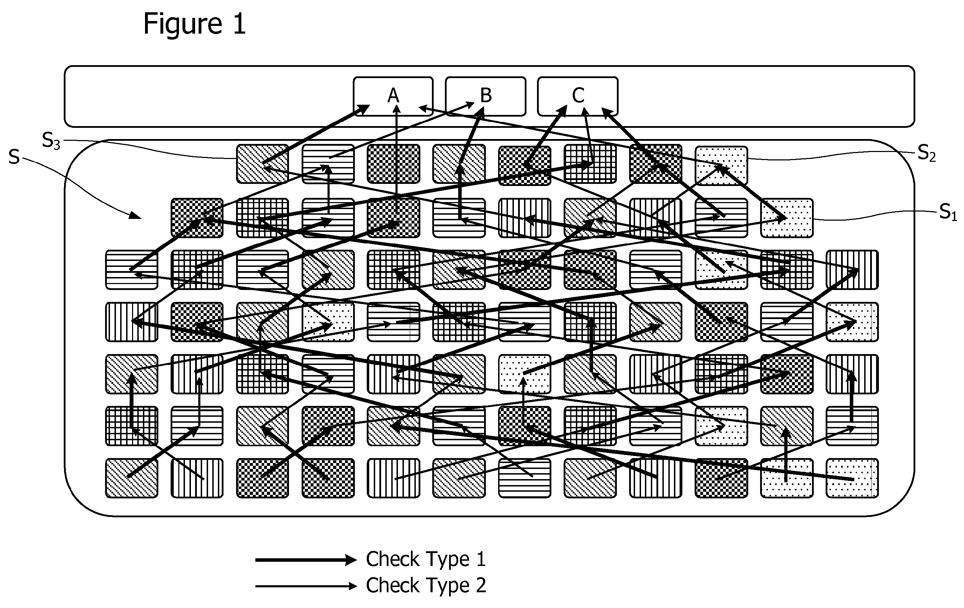

Figure 1 shows a program code portion which has been divided into a plurality of code segments comprising three root code segments A, B and C and a plurality of sub-code segments S forming eight sequences of code segments. In this embodiment, the program code portion has been compiled and, thus, the positions of the sub-code segments represents their distribution throughout the compiled application.

In this embodiment, the root code segments represent segments of code which comprise means defining attributes of proper use of the program which have been specified by the developer. These attributes may include, for example: limitations imposed on the use of the program or checks that are to be performed by the program such as checking that the user of the program has purchased the full version of the application, or has a licence to use the application.

The different shading of the segments represents the method that is used to disguise the presence of the checking code within the application code. Each arrow from a given sub-code segment is to a target code segment which is sequentially adjacent to the given sub-code segment in a checking direction. For example, the target code segment of sub-code segment S₁ is sub-code segment S₂. Furthermore, the target code segment of sub-code segment S₃ is root code segment A. The thickness of the arrow represents the type of checking process that is employed by the integrity checking portion of the originating code segment. Thus, according to this embodiment, two types of checking procedure are employed. These may be, for example, a cyclic redundancy check operable to obtain a checksum of a defined area of the target code segment to obtain a value, or some other sort of checksum or other checking method.

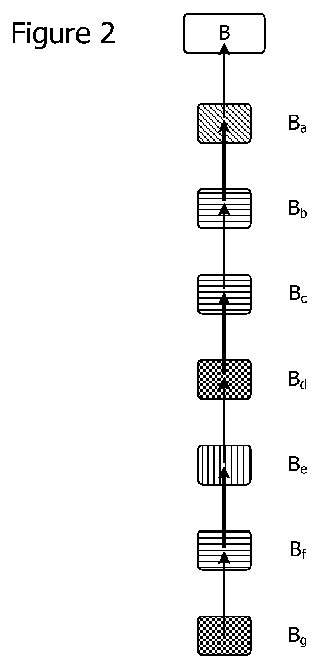

Figure 2 shows one of the sequences of the Figure 1 embodiment which is associated with root-code segment B. In order to compute the reference result for each of the sub-code segments Bₐ to B_{g}, a reference result computation process is performed. This may be implemented as described below.

Specifically, according to the present embodiment, the reference result for sub-code segment Bₐ is obtained by performing an implementation checking procedure on its target code segment, namely the root code segment B. This involves carrying out a cyclic redundancy check (for example), on a predetermined portion of memory which is associated with root code segment B and which specifies an attribute of the program, to obtain a first value or first "reference result". At runtime, the integrity checking portion will be operable to perform a runtime checking procedure on the defined part of the memory of root code segment B in order to obtain a first "runtime result", and will be further operable to compare this runtime result with the reference result associated therewith. The integrity of the root code segment is verified according to this comparison, which may require the runtime result to be equal to the reference result or related by some predetermined relationship.

Similarly, the reference result for a second sub-code segment B_{b}, is obtained by performing an implementation checking procedure on its target code segment, namely sub-code segment Bₐ. The implementation checking procedure is carried out on a predefined area of memory associated with sub-code segment Bₐ that contains the first reference result. Thus, a reference result for B_{b}, which will be dependent upon the first reference result for Bₐ, is derived and is subsequently stored. At runtime, the integrity checking portion of sub-code segment B_{b} is operable to carry out a runtime checking procedure on part of memory associated with Bₐ that stores the first runtime result (as opposed to the first reference result), and is then further operable to compare the resultant second runtime result with the second reference result associated with sub-code segment B_{b}.

This reference result computation process continues in this manner until the (or each) reference result for each of the sub-code segments Bₐ to B_{g} has been derived and stored.

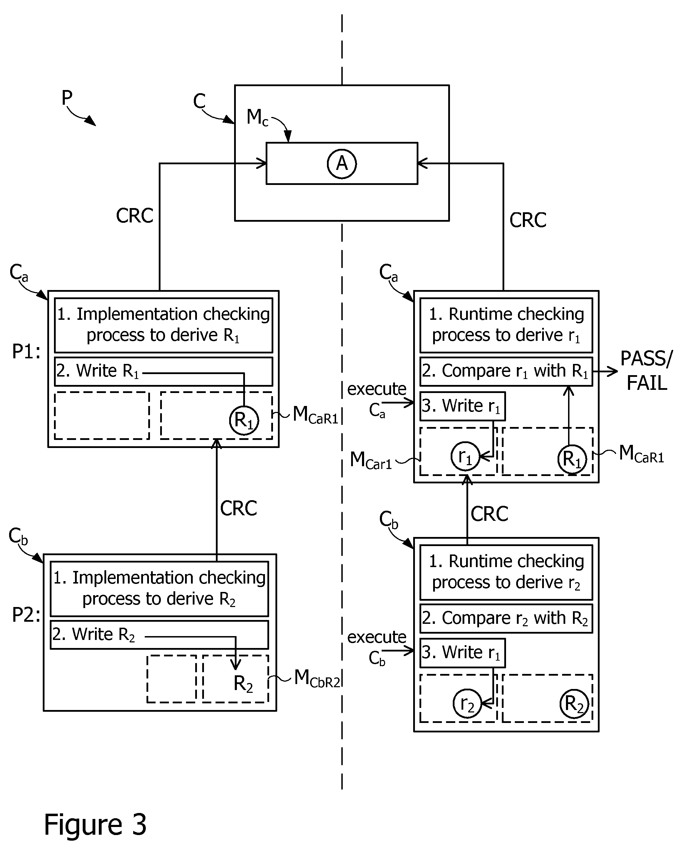

Figure 3 illustrates, on the left-hand side thereof, a reference result computation process P according to an embodiment of the present invention, for a code sequence comprising a root code segment C and sub-code segments Cₐ and C_{b}. Reference result computation process P comprises carrying out, in sequence, a first reference result computation process P₁, for defining a reference result R₁ of sub-code segment Cₐ, followed by a second reference result computation process P₂ for deriving a reference result R₂ of sub-code segment C_{b}. Process P₁ involves carrying out an implementation checking process, whereby a checksum procedure is performed on a memory portion M_{c} of root-code segment C. Memory portion M_{c} specifies an attribute A defined by, for example, the program developer. The checksum procedure derives a value which is employed as first reference value R₁. The value R₁ is stored/written into memory portion M_{caR1}. A second reference result computation process P₂ is performed for sub-code segment C_{b} in which an implementation checking process comprising a checksum is performed on the memory potion M_{caR1} of sub-code segment Cₐ to derive a value which is employed as second reference value R₂. The value of R₂ is stored in memory portion M_{cbR2}.

The right-hand side of Figure 3 illustrates an integrity checking method that will be performed by sub-code segments Cₐ and C_{b} at runtime. Thus, the integrity checking potion of sub-code segment Cₐ is operable to perform an integrity checking method that will be initiated when, or shortly after, the execution of sub-code segment is commenced. According to the integrity checking method that is to be performed by Cₐ, a runtime checking process is carried out, whereby a checksum procedure is performed on a memory portion M_{c} of root-code segment C to obtain a runtime result r₁. This result is compared with the reference result R₁ stored in memory portion M_{c1R1}. According to the outcome of this comparison, the integrity checking procedure will either pass or fail. Furthermore, runtime result r₁ is written to memory portion M_{car1}. A checksum procedure performed on memory portion M_{car1} will be generate the same result as the same checksum procedure performed on memory portion M_{c1R1} if r₁ equals R₁.

The integrity checking portion of sub-code segment C_{b} is operable to carry out an integrity checking procedure, which involves checking the memory portion M_{car1} of sub-code segment C_{b}, to obtain a runtime result r₂ Thus, the value of r₂ will depend on the value of r₁ obtained by the integrity checking portion of sub-code segment Cₐ.

Moreover, a comparison with r₂ and R₂ will only "pass" if the comparison with r₁ and R₁ also passes.

The benefit of embodiments of the present invention can be appreciated by considering what would happen if a hacker were to modify attribute A, for example, to become A'. In this case, in order to prevent an integrity checking procedure that will be performed by Cₐ at runtime from failing, the hacker will also have to modify the value of reference value R₁ so that runtime result r₁ compares favourably with R₁. Furthermore, since the validity of information stored in memory portion M_{car1} will be checked by sub-code segment C_{b}, then in order to ensure that an integrity checking procedure that will be carried out by C_{b} at runtime does not fail, it would be necessary for the hacker to modify the value of reference value R₂ so that runtime result r₂ will compare favourably with R₂. Effectively, in order to modify an attribute specified in the root code segment (for example), it would be necessary for a hacker to trace and modify every sub-code segment linked to that root-code segment.

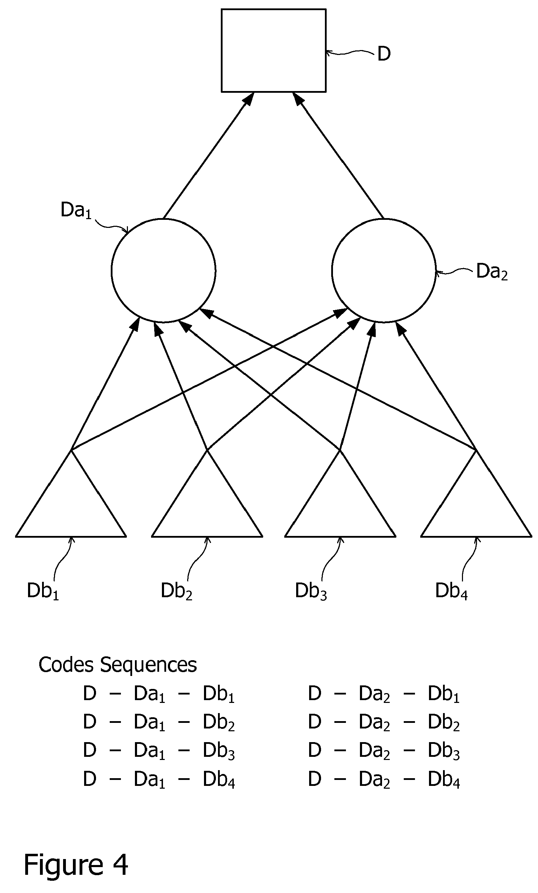

Figure 4 shows a simplified illustration of a candidate program portion which has been divided into a plurality of code-segments, wherein a topology of checking procedures are defined in the form of an inverted tree structure. Thus, root code portion D will be checked at runtime by two primary level sub-code segments Dₐ₁ and Dₐ₂. Furthermore, Dₐ₁ and Dₐ₂ will be checked at runtime by each of four secondary level sub-code segments D_{b2} to D_{b4}. Thus, in this example, a total of eight sequences of code segments can be defined, with Dₐ₁ forming a part of four sequences of code segments and D_{b2} forming part of four sequences of code segments.

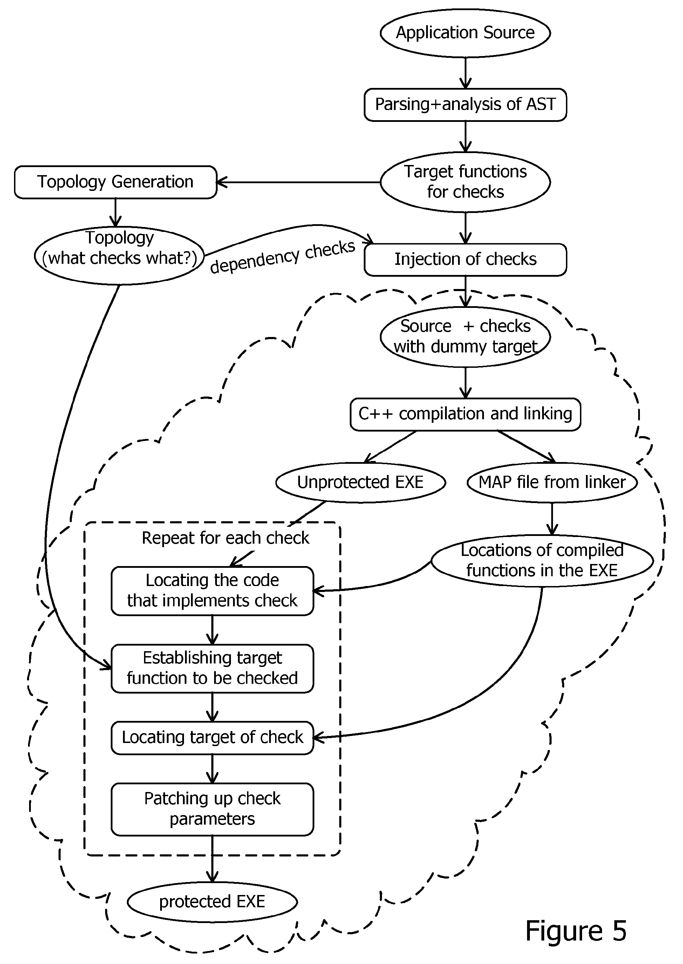

Figure 5 illustrates the steps involved in an anti-tamper method embodying the present invention for protecting a target application against tampering. As shown by Figure 5, the application's source code is parsed to generate a representation of it as an Abstract Syntax Tree (AST). Small meta-programs are then used to compile a set of target functions into which checking code can sensibly be inserted. Criteria used here include: the ability of the host code to adequately disguise an injected check; suitability in terms of performance e.g. is code in the target function part of a time-critical inner loop?; number of times the function is called by the application.

The target functions form the basis of the code segments into which the underlying target application is divided. The topology of the integrity checking network is determined.

Small meta-programs are used to insert checking code into the target functions. The injected code should, come runtime, contain references to the function that is to be checked. At this stage, dummy values are injected for the area of memory to check, and the value that that check should generate.

The code (with injected checks) is compiled, for example using a standard C++ compiler into an executable (EXE) file. At the linking phase of compilation, a so-called MAP file is generated which contains information about where in the EXE the code for each application function has ended up. From this, it is possible to infer where in run-time memory these functions will reside.

A number of steps are performed for each of the target code segments which were injected with checks:
- the compiled code for these code segments is located using data from the MAP file;
- the code segment that this check should target is established (from the topology decided above);
- the code for that code segment is located using the MAP file;
- the checksum (or other integrity checking procedure) of the code for that function is computed;
- the dummy values inserted above are patched up so that this check does indeed target the one required by the topology. Furthermore, the computed checksum computed as the value that the run-time check should expect to find is inserted. If this value is not found at runtime, the code segment in question has been modified: a hack has taken place.

This process results in a protected EXE, i.e. a protected program portion or anti-tamper system embodying the present invention.

It is important that the checks are patched up in the correct order, i.e. starting at the "top" of a code sequence with the root code segment, and working down. The patched up functions at the top should themselves be check summed for the checks lower down.

Having illustrated and described the invention in several embodiments and examples, it should be apparent that the invention can be modified, embodied, elaborated or applied in various ways without departing from the principles of the invention. The invention can be implemented in software programs and data structures stored on portable storage media, transmitted by digital communications, or other transmission medium, or stored in a computer memory. Such programs and data structures can be executed on a computer, to perform methods embodying the invention, and to operate as a machine, or part of apparatus, having the capabilities described herein.

## Claims

1. An anti-tamper method for protecting a program code portion against tampering, the anti-tamper method comprising:
dividing said program code portion into a plurality of code segments (C, Cₐ, C_{b});
defining a sequence of code segments from the code segments, wherein said sequence of code segments comprises a root-code segment (C) and a plurality of sub-code segments (Cₐ, C_{b});
providing each sub-code segment with an integrity checking portion for checking the integrity of a target code segment, said target code segment of a given sub-code segment being the code segment that is sequentially adjacent in a checking direction towards said root-code segment;
wherein the integrity checking portion of a given sub-code segment is operable to carry out a checking procedure (P, P₁, P₂) on memory associated with the respective target code segment to obtain a runtime result (r₁, r₂), and to compare said runtime result with a reference result (R₁, R₂) comprised in said given sub-code segment,
**characterized in that** the integrity checking portion of a given sub-code segment (C, Cₐ, C_{b}) is further operable to write said runtime result (r₁, r₂) into memory (M_{Car1}, M_{Cbr2}) associated with the given sub-code segment, such that the integrity checking procedure (P, P₁, P₂) of a further sub-code segment sequentially adjacent in a checking direction away from said root-code segment (C) carries out the checking procedure on memory including the runtime result.

2. An anti-tamper method as claimed in claim 1, wherein said integrity checking portion of one said sub-code segment (C, Cₐ, C_{b}) defines a checking procedure (P, P₁, P₂) which involves performing a checksum procedure on the target code segment.

3. An anti-tamper method as claimed in claim 2, wherein the checksum procedure (P, P₁, P₂) comprises a cyclic redundancy check.

4. An anti-tamper method as claimed in claim 1, wherein the program code portion is divided into code segments (C, Cₐ, C_{b}) such that each segment comprises a function of the program code portion.

5. An anti-tamper method as claimed in any preceding claim, wherein said root code segment (C) comprises an attribute specifying portion which defines a specified attribute of the program.

6. An anti-tamper method as claimed in any preceding claim, comprising defining a plurality of code sequences, such that one or more segments form part of more than one code sequence.

7. An anti-tamper method as claimed in any preceding claim, comprising the step of defining a topology to represent the arrangement of the code segments comprised said sequence within the plurality of code segments.

8. An anti-tamper method as claimed in any preceding claim, wherein the program code portion comprises source code.

9. An anti-tamper method as claimed in any one of claims 1 to 7, wherein the program code portion comprises compiled code.

10. An anti-tamper system for protecting a program code portion against tampering, the anti-tamper system comprising a computer readable storage medium having a plurality of program code segments (C, Cₐ, C_{b}) of a program code portion stored thereon, said program code segments defining a sequence of code segments, wherein said sequence of code segments comprises a root-code segment (C) and a plurality of sub-code segments (Cₐ, C_{b});
wherein each sub-code segment comprises an integrity checking portion for checking the integrity of a target code segment, said target code segment for a given sub-code segment being the code segment that is sequentially adjacent in a checking direction towards said root-code segment;
wherein the integrity checking portion of a given sub-code segment is operable to carry out a checking procedure on memory associated with the respective target code segment to obtain a runtime result (r₁, r₂), and to compare said runtime result with a reference result (R₁, R₂) comprised in said given sub-code segment;
**characterized in that** the memory (M_{Car1}, M_{Cbr2}) associated with the respective target code segment includes the runtime result (r₁, r₂) provided by the integrity checking portion of the respective target code segment, such that the integrity checking procedure (P, P₁, P₂) of a further sub-code segment (C, Cₐ, C_{b}) sequentially adjacent in a checking direction away from said root-code segment (C) carries out the checking procedure on memory including the runtime result.

11. An integrity checking method for checking the integrity of a program code portion comprising a plurality of code segments (C, Cₐ, C_{b}), said program portion having at least one sequence of code segments comprising a root code segment (C) and a plurality of sub-code segments (Cₐ, C_{b}), the integrity checking method comprising, for a given code segment:
i) performing a runtime checking procedure which checks memory of a target code segment to obtain a runtime result, said target code segment for said given sub-code segment being the code segment that is sequentially adjacent in a checking direction towards said root-code segment, said memory of the target code segment including, for cases other than the target code segment being the root segment, a runtime result (r₁, r₂) obtained by performance of the runtime checking procedure (P, P₁, P₂) of the target segment; and
ii) comparing said runtime result with a reference result (R₁, R₂); **characterized in that** the integrity checking method further comprises writing said runtime result (r₁, r₂) into memory (M_{Car1}, M_{Cbr2}) of the given code segment (Cₐ, C_{b}) such that the integrity checking procedure (P₁, P₂) of a further sub-code segment sequentially adjacent in a checking direction away from said root-code segment (C) carries out the checking procedure on memory including the runtime result.

12. A computer program which, when loaded into a computer, causes the computer to carry out the integrity checking method of claim 11.

13. A computer program as clamed in claim 12, carried by a carrier medium.

14. A computer program as claimed in claim 13, wherein said carrier medium is a recording medium.

15. A computer program as claimed in claim 13, wherein said carrier medium is a transmission medium.

## Patentansprüche

1. Gegen unbefugten Eingriff gesichertes Verfahren zum Sichern eines Programmcodeabschnitts gegen unbefugten Eingriff, wobei das gegen unbefugten Eingriff gesicherte Verfahren folgendes umfasst:
Aufteilen des besagten Programmcodeabschnitts in eine Vielzahl von Codesegmenten (C, Cₐ, C_{b});
Definieren einer Sequenz von Codesegmenten aus den Codesegmenten, wobei die besagte Sequenz von Codesegmenten ein Wurzelcodesegment (C) und eine Vielzahl von Subcodesegmenten (Cₐ, C_{b}) umfasst;
Vorsehen eines Integritätsprüfungsabschnitts für jedes Subcodesegment, um die Integrität eines Zielcodesegments zu prüfen, wobei das besagte Zielcodesegment eines gegebenen Subcodesegments das Codesegment ist, das sequenziell angrenzend in einer sich nach dem besagten Wurzelcodesegment richtenden Prüfungsrichtung ist;
bei dem der Integritätsprüfungsabschnitt eines gegebenen Subcodesegments betreibbar ist, um auf den mit dem jeweiligen Zielcodesegment assoziierten Speicher eine Prüfungsprozedur (P, P₁, P₂) zum Erhalten eines Laufzeitergebnisses (r₁, r₂) anzuwenden, und um das besagte Laufzeitergebnis mit einem Bezugsergebnis (R₁, R₂) zu vergleichen, das im besagten gegebenen Subcodesegment enthalten ist,
**dadurch gekennzeichnet, dass** der Integritätsprüfungsabschnitt eines gegebenen Subcodesegments (C, Cₐ, C_{b}) ferner betreibbar ist, um das besagte Laufzeitergebnis (r₁, r₂) in den mit dem gegebenen Subcodesegment assoziierten Speicher (M_{Car1}, M_{Cbr2}) so zu schreiben, dass die Integritätsprüfungsprozedur (P, P₁, P₂) eines anderen in einer sich von dem besagten Wurzelcodesegment (C) entfernenden Prüfungsrichtung sequenziell angrenzenden Subcodesegments die Prüfungsprozedur an dem das Laufzeitergebnis enthaltenden Speicher durchführt.

2. Gegen unbefugten Eingriff gesichertes Verfahren nach Anspruch 1, bei dem der besagte Integritätsprüfungsabschnitt eines besagten Subcodesegments (C, Cₐ, C_{b}) eine Prüfungsprozedur (P, P₁, P₂) definiert, die die Anwendung einer Prüfsummenprozedur auf das Zielcodesegment impliziert.

3. Gegen unbefugten Eingriff gesichertes Verfahren nach Anspruch 2, bei dem die Prüfsummenprozedur (P, P₁, P₂) eine zyklische Redundanzprüfung umfasst.

4. Gegen unbefugten Eingriff gesichertes Verfahren nach Anspruch 1, bei dem der Programmcodeabschnitt in Codesegmente (C, Cₐ, C_{b}) so aufgeteilt ist, dass jedes Segment eine Funktion des Programmcodeabschnitts umfasst.

5. Gegen unbefugten Eingriff gesichertes Verfahren nach einem der vorhergehenden Ansprüche, bei dem das besagte Wurzelcodesegment (C) einen Attributspezifizierungsabschnitt umfasst, der ein spezifiziertes Attribut des Programms definiert.

6. Gegen unbefugten Eingriff gesichertes Verfahren nach einem der vorhergehenden Ansprüche, umfassend die Definition einer Vielzahl von Codesequenzen, so dass ein oder mehrere Segmente zu mehr als einer Codesequenz gehören.

7. Gegen unbefugten Eingriff gesichertes Verfahren nach einem der vorhergehenden Ansprüche, umfassend den Schritt, der darin besteht, eine Topologie zum Darstellen der Anordnung der in der besagten Sequenz enthaltenen Codesegmente innerhalb der Vielzahl von Codesegmenten zu definieren.

8. Gegen unbefugten Eingriff gesichertes Verfahren nach einem der vorhergehenden Ansprüche, bei dem der Programmcodeabschnitt Quellcode umfasst.

9. Gegen unbefugten Eingriff gesichertes Verfahren nach einem der Ansprüche 1 bis 7, bei dem der Programmcodeabschnitt kompilierten Code umfasst.

10. Gegen unbefugten Eingriff gesichertes System zum Sichern eines Programmcodeabschnitts gegen unbefugten Eingriff, das gegen unbefugten Eingriff gesicherte System umfassend einen Computer-lesbaren Speicherungsträger mit einer Vielzahl von darauf gespeicherten Programmcodesegmenten (C, Cₐ, C_{b}) eines Programmcodeabschnitts, wobei die besagten Programmcodesegmente eine Sequenz von Codesegmenten definieren, wobei die besagte Sequenz von Codesegmenten ein Wurzelcodesegment (C) und eine Vielzahl von Subcodesegmenten (Cₐ, C_{b}) umfasst;
bei dem jedes Subcodesegment einen Integritätsprüfungsabschnitt zum Prüfen der Integrität eines Zielcodesegments umfasst, wobei das besagte Zielcodesegment für ein gegebenes Subcodesegment das Codesegment ist, das sequenziell angrenzend in einer sich nach dem besagten Wurzelcodesegment richtenden Prüfungsrichtung ist;
bei dem der Integritätsprüfungsabschnitt eines gegebenen Subcodesegments betreibbar ist, um eine Prüfungsprozedur auf den mit dem jeweiligen Zielcodesegment assoziierten Speicher zum Erhalten eines Laufzeitergebnisses (r₁, r₂) anzuwenden, und um das besagte Laufzeitergebnis mit einem im besagten gegebenen Subcodesegment enthaltenen Bezugsergebnis (R₁, R₂) zu vergleichen;
**dadurch gekennzeichnet, dass** der mit dem jeweiligen Zielcodesegment assoziierte Speicher (M_{Car1}, M_{Cbr2}) das durch den Integritätsprüfungsabschnitt des jeweiligen Zielcodesegments gelieferte Laufzeitergebnis (r₁, r₂) enthält, so dass die Integritätsprüfungsprozedur (P, P₁, P₂) eines anderen in einer sich vom besagten Wurzelcodesegment (C) entfernenden Prüfungsrichtung sequenziell angrenzenden Subcodesegments (C, Cₐ, C_{b}) die Prüfungsprozedur an dem das Laufzeitergebnis enthaltenden Speicher durchführt.

11. Integritätsprüfungsverfahren zum Prüfen der Integrität eines eine Vielzahl von Codesegmenten (C, Cₐ, C_{b}) umfassenden Programmcodeabschnitts, wobei der besagte Programmabschnitt mindestens eine Sequenz von ein Wurzelcodesegment (C) und eine Vielzahl von Subcodesegmenten (Cₐ, C_{b}) umfassenden Codesegmenten aufweist, wobei für ein gegebenes Codesegment das Integritätsprüfungsverfahren folgendes umfasst:
i) Anwendung einer Laufzeitprüfungsprozedur, die den Speicher eines Zielcodesegments zum Erhalten eines Laufzeitergebnisses prüft, wobei das besagte Zielcodesegment für das besagte gegebene Subcodesegment das Codesegment ist, das sequenziell angrenzend in einer sich nach dem besagten Wurzelcodesegment richtenden Prüfungsrichtung ist, wobei für andere Fälle, wo das Zielcodesegment nicht das Wurzelsegment ist, der besagte Speicher des Zielcodesegments ein Laufzeitergebnis (r₁, r₂) enthält, das durch Anwendung der Laufzeitprüfungsprozedur (P, P₁, P₂) des Zielsegments erhalten wird; und
ii) Vergleichen des besagten Laufzeitergebnisses mit einem Bezugsergebnis (R₁, R₂);
**dadurch gekennzeichnet, dass** das Integritätsprüfungsverfahren ferner umfasst, das besagte Laufzeitergebnis (r₁, r₂) in den Speicher (M_{Car1}, M_{Cbr2}) des gegebenen Codesegments (Cₐ, C_{b}) so zu schreiben, dass die Integritätsprüfungsprozedur (P₁, P₂) eines anderen in einer sich vom besagten Wurzelcodesegment (C) entfernenden Prüfungsrichtung sequenziell angrenzenden Subcodesegments die Prüfungsprozedur an dem das Laufzeitergebnis enthaltenden Speicher durchführt.

12. Computerprogramm das, wenn es in einem Computer geladen ist, den Computer veranlasst, das Integritätsprüfungsverfahren nach Anspruch 11 durchzuführen.

13. Computerprogramm nach Anspruch 12, das von einem Trägermedium getragen wird.

14. Computerprogramm nach Anspruch 13, bei dem das besagte Trägermedium ein Aufzeichnungsträger ist.

15. Computerprogramm nach Anspruch 13, bei dem das besagte Trägermedium ein Übertragungsträger ist.

## Revendications

1. Procédé de protection contre les interventions non autorisées pour protéger une portion de code programme contre les interventions non autorisées, le procédé de protection contre les interventions non autorisées comprenant :
la division de ladite portion de code programme en une pluralité de segments de code (C, Cₐ, C_{b}) ;
la définition d'une séquence de segments de code à partir des segments de code, dans laquelle ladite séquence de segments de code comprend un segment de code racine (C) et une pluralité de segments de sous-code (Cₐ, C_{b}) ;
la prévision, pour chaque segment de sous-code, d'une portion de contrôle d'intégrité pour contrôler l'intégrité d'un segment de code cible, ledit segment de code cible d'un segment de sous-code donné étant le segment de code qui est séquentiellement adjacent dans une direction de contrôle allant vers ledit segment de code racine ;
dans lequel la portion de contrôle d'intégrité d'un segment de sous-code donné peut être utilisée pour réaliser une procédure de contrôle (P, P₁, P₂) sur la mémoire associée au segment de code cible respectif pour obtenir un résultat d'exécution (r₁, r₂), et pour comparer ledit résultat d'exécution à un résultat de référence (R₁, R₂) compris dans ledit segment de sous-code donné,
**caractérisé en ce que** la portion de contrôle d'intégrité d'un segment de sous-code donné (C, Cₐ, C_{b}) peut en outre être utilisée pour écrire ledit résultat d'exécution (r₁, r₂) dans la mémoire (M_{Car1}, M_{Cbr2}) associée au segment de sous-code donné, de telle sorte que la procédure de contrôle d'intégrité (P, P₁, P₂) d'un autre segment de sous-code séquentiellement adjacent dans une direction de contrôle s'éloignant dudit segment de code racine (C) exécute la procédure de contrôle sur la mémoire incluant le résultat d'exécution.

2. Procédé de protection contre les interventions non autorisées selon la revendication 1, dans lequel ladite portion de contrôle d'intégrité d'un dit segment de sous-code (C, Cₐ, C_{b}) définit une procédure de contrôle (P, P₁, P₂) qui implique la réalisation d'une procédure de somme de contrôle sur le segment de code cible.

3. Procédé de protection contre les interventions non autorisées selon la revendication 2, dans lequel la procédure de somme de contrôle (P, P₁, P₂) comprend un contrôle de redondance cyclique.

4. Procédé de protection contre les interventions non autorisées selon la revendication 1, dans lequel la portion de code programme est divisée en segments de code (C, Cₐ, C_{b}) de telle sorte que chaque segment comprend une fonction de la portion de code programme.

5. Procédé de protection contre les interventions non autorisées selon l'une quelconque des revendications précédentes, dans lequel ledit segment de code racine (C) comprend une portion de spécification d'attribut qui définit un attribut spécifié du programme.

6. Procédé de protection contre les interventions non autorisées selon l'une quelconque des revendications précédentes, comprenant la définition d'une pluralité de séquences de code, de telle sorte qu'un ou plusieurs segments font partie de plus d'une séquence de code.

7. Procédé de protection contre les interventions non autorisées selon l'une quelconque des revendications précédentes, comprenant l'étape consistant à définir une topologie pour représenter l'agencement des segments de code compris dans ladite séquence au sein de la pluralité de segments de code.

8. Procédé de protection contre les interventions non autorisées selon l'une quelconque des revendications précédentes, dans lequel la portion de code programme comprend du code source.

9. Procédé de protection contre les interventions non autorisées selon l'une quelconque des revendications 1 à 7, dans lequel la portion de code programme comprend du code compilé.

10. Système de protection contre les interventions non autorisées pour protéger une portion de code programme contre les interventions non autorisées, le système de protection contre les interventions non autorisées comprenant un support de stockage lisible par ordinateur ayant une pluralité de segments de code programme (C, Cₐ, C_{b}) d'une portion de code programme stockés dessus, lesdits segments de code programme définissant une séquence de segments de code, ladite séquence de segments de code comprenant un segment de code racine (C) et une pluralité de segments de sous-code (Cₐ, C_{b}) ;
dans lequel chaque segment de sous-code comprend une portion de contrôle d'intégrité pour contrôler l'intégrité d'un segment de code cible, ledit segment de code cible pour un segment de sous-code donné étant le segment de code qui est séquentiellement adjacent dans une direction de contrôle allant vers ledit segment de code racine ;
dans lequel la portion de contrôle d'intégrité d'un segment de sous-code donné peut être utilisée pour réaliser une procédure de contrôle sur la mémoire associée au segment de code cible respectif pour obtenir un résultat d'exécution (r₁, r₂), et pour comparer ledit résultat d'exécution à un résultat de référence (R₁, R₂) compris dans ledit segment de sous-code donné ;
**caractérisé en ce que** la mémoire (M_{Car1}, M_{Cbr2}) associée au segment de code cible respectif inclut le résultat d'exécution (r₁, r₂) fourni par la portion de contrôle d'intégrité du segment de code cible respectif, de telle sorte que la procédure de contrôle d'intégrité (P, P₁, P₂) d'un autre segment de sous-code (C, Cₐ, C_{b}) séquentiellement adjacent dans une direction de contrôle s'éloignant dudit segment de code racine (C) exécute la procédure de contrôle sur la mémoire incluant le résultat d'exécution.

11. Procédé de contrôle d'intégrité pour contrôler l'intégrité d'une portion de code programme comprenant une pluralité de segments de code (C, Cₐ, C_{b}), ladite portion de programme ayant au moins une séquence de segments de code comprenant un segment de code racine (C) et une pluralité de segments de sous-code (Cₐ, C_{b}), le procédé de contrôle d'intégrité comprenant, pour un segment de code donné :
i) la réalisation d'une procédure de contrôle d'exécution qui contrôle la mémoire d'un segment de code cible pour obtenir un résultat d'exécution, ledit segment de code cible pour ledit segment de sous-code donné étant le segment de code qui est séquentiellement adjacent dans une direction de contrôle allant vers ledit segment de code racine, ladite mémoire du segment de code cible incluant, pour les cas autres que ceux où le segment de code cible est le segment racine, un résultat d'exécution (r₁, r₂) obtenu par la réalisation de la procédure de contrôle d'exécution (P, P₁, P₂) du segment cible ; et
ii) la comparaison dudit résultat d'exécution à un résultat de référence (R₁, R₂) ;
**caractérisé en ce que** le procédé de contrôle d'intégrité comprend en outre l'écriture dudit résultat d'exécution (r₁, r₂) dans la mémoire (M_{Car1}, M_{Cbr2}) du segment de code donné (Cₐ, C_{b}) de telle sorte que la procédure de contrôle d'intégrité (P₁, P₂) d'un autre segment de sous-code séquentiellement adjacent dans une direction de contrôle s'éloignant dudit segment de code racine (C) exécute la procédure de contrôle sur la mémoire incluant le résultat d'exécution.

12. Programme informatique qui, lorsqu'il est chargé dans un ordinateur, cause la réalisation par l'ordinateur du procédé de contrôle d'intégrité selon la revendication 11.

13. Programme informatique selon la revendication 12, porté par un support.

14. Programme informatique selon la revendication 13, dans lequel ledit support est un support d'enregistrement.

15. Programme informatique selon la revendication 13, dans lequel ledit support est un support de transmission.
